# EUROPÄISCHE PATENTSCHRIFT

(11) **EP 2 142 404 B1**
(45) Veröffentlichungstag und Bekanntmachung des Hinweises auf die Patenterteilung: **12.10.2011**
(21) Anmeldenummer: 08708806.8
(22) Anmeldetag: 08.02.2008
(51) Int. Cl.: B60S 1/40

(54) **ANSCHLUSSVORRICHTUNG**
CONNECTOR DEVICE
DISPOSITIF DE LIAISON

(30) Priorität: 05.04.2007 DE 102007016479
(43) Veröffentlichungstag der Anmeldung: 13.01.2010
(73) Patentinhaber: Robert Bosch GmbH, 70442 Stuttgart (DE)
(72) Erfinder: VAN BAELEN, David, B-3020 Winksele (BE)
(86) Internationale Anmeldenummer: PCT/EP2008/051528
(87) Internationale Veröffentlichungsnummer: WO 2008/122453

(56) Entgegenhaltungen:
- WO-A-2005/102802
- FR-A- 2 600 292
- FR-A- 2 857 318

## Beschreibung

### Stand der Technik

Die Erfindung geht von einer Anschlussvorrichtung nach dem Oberbegriff des Anspruchs 1 aus.

Aus der WO-A-2005/102802 ist eine gattungsgemäße Anschlussvorrichtung mit einer Gelenkachse bekannt, auf die ein Adapter mit seiner offenen Nabe aufgesetzt wird. Der Adapter besitzt zur Aufnahme eines hakenförmigen Endes einer Wischstange eine Anlagefläche, die entsprechend dem Bogen zwischen einem oberen Schenkel und einem unteren Schenkel des hakenförmigen Endes gerundet ist. Ferner schließt sich an die Anlagefläche zum antriebseitigen Ende hin eine ebene Anlagefläche für den oberen Schenkel des hakenförmigen Endes an. Die Anlageflächen sind zwischen zwei Seitenwangen angeordnet. Diese stehen ein Stück weit über die Anlageflächen vor, sodass das hakenförmige Ende zwischen den Seitenwangen seitlich geführt ist. In Längsrichtung gehen die Seitenwangen in Seitenflügel über, die an ihren Innenseiten Rastnasen aufweisen, sodass das hakenförmige Ende mit seinem Bogenstück zwischen der Anlagefläche und den Rastnasen in Längsrichtung gehalten wird.

Zur Abdeckung des Gelenks dient eine Abdeckkappe, die mit innen liegenden, nicht sichtbaren Rastnasen an Aussparungen und/oder Vertiefungen der Seitenwände der Anschlussvorrichtung verrastet. Die Abdeckkappe ihrerseits besitzt einen Dekkel, der an dem antriebsseitigen Ende der Abdeckkappe angelenkt ist und eine Öffnung aufweist, durch die das hakenförmige Ende der Wischstange während der Montage geschoben wird. Das hakenförmige Ende wird schließlich über die Anlageflächen geschoben und verrastet mit dem bogenförmigen Teil zwischen seinen Schenkeln an den Rastnasen der Seitenflügel. Wird nun der Deckel geschlossen, sichert ein Begrenzungssteg zusätzlich zu den Rastnasen das hakenförmige Ende in Längsrichtung des Wischblatts. Der Begrenzungssteg ist an der Deckwand des Deckels angeformt und erstreckt sich in geschlossenem Zustand des Deckels mit einer ebenen Anlagefläche etwa tangential zum bogenförmigen Stück des hakenförmigen Endes, und zwar zwischen den Seitenwangen und den Rastnasen.

Ferner ist aus der FR-A-2857318 ein anderes Konzept bekannt. Hierbei ist in einem Kupplungsteil ein Halter angebracht. Der Halter trägt zwischen seinen Seitenwänden eine Kupplungswelle, auf der mittels einer offenen Nabe ein Klipp schwenkbar gelagert ist. Zwischen den Seitenwänden des Klipps ist auf innen angeordneten Gelenkzapfen ein Klipphalter schwenkbar gelagert, wobei der Klipphalter zwischen den Seitenwänden des Klipps geführt ist. Der Klipphalter verschließt die nach oben offene Kupplungseinrichtung und den Halter. Der Klipphalter ist an dem zum äußeren Ende des Wischblatts weisenden Ende des Klipps angelenkt. Der Klipphalter weist ein Eingriffsteil mit einer Eingriffsfläche auf, die mit dem gebogenen Teil des hakenförmigen Endes eine Schnappverbindung bildet.

### Offenbarung der Erfindung

Nach der Erfindung weist die Klappe eine Querwand auf, die bei geschlossener Klappe der Lagerfläche gegenüberliegt und an der eine in Längsrichtung verlaufende, auf die Lagerfläche gerichtete Stützwand angeformt ist. An der freien Stirnseite der Stützwand ist eine Anlagekontur für das hakenförmige Ende vorgesehen, die bei geschlossener Klappe das hakenförmige Ende in Längsrichtung sichert, sodass das hakenförmige Ende nicht mehr von dem Adapter geschoben werden kann. Die Stützwand dient als Schnappverbindung, indem sie ein bogenförmiges Verbindungsstück des hakenförmigen Endes zumindest teilweise umfasst.

Die Anlagekontur befindet sich zweckmäßigerweise an einem formsteifen Teil der Klappe. Von der Querwand geht die Stützwand aus, die an ihrer freien Stirnseite die auf die Lagerfläche gerichtete Anlagekontur besitzt. Zwischen der Anlagekontur und der Lagerfläche befindet sich ein Freiraum, der der Materialstärke des hakenförmigen Endes angepasst ist, sodass sich in Längsrichtung des Wischblatts nur ein geringes Spiel ergibt. In Ausgestaltung der Erfindung wird vorgeschlagen, dass die Anlagekontur so ausgebildet ist, dass sie als Schnappverbindung ein bogenförmiges Verbindungsstück des hakenförmigen Endes zumindest teilweise umfasst. Dadurch kann die Klappe in ihrer geschlossenen Stellung gesichert werden. Die Querwand kann in Längsrichtung an einer beliebigen, geeigneten Stelle der Klappe angeordnet sein. Es ist auch möglich, dass die vordere Stirnwand der Klappe die Querwand bildet, an die die Stützwand angeformt ist.

Zusätzlich oder anstelle der Schnappverbindung im Bereich der Anlagekontur ist es vorteilhaft, dass die Klappe an ihren Längsseiten im Bereich der vorderen Stirnwand nach innen nachgiebige Rasthaken aufweist, die bei geschlossener Klappe in Rastvertiefungen des Basiselements eingreifen und Rastnokken am Rand der Rastvertiefungen hintergreifen. Die Rasthaken werden durch einen Druck auf die Außenseiten der in diesem Bereich nachgiebigen Seitenwände aus der Verrastung gelöst. Zur besseren Handhabung sind an diesen Stellen der Seitenwände Griffleisten oder Griffmulden angeordnet.

Eine zusätzliche Sicherung des hakenförmigen Endes gegenüber dem Wischblatt wird dadurch ermöglicht, dass der Adapter in Längsrichtung über das hakenförmige Ende hervorragende Federzungen mit nach innen gerichteten Rastnocken besitzt. Diese sichern in montierter Stellung das hakenförmige Ende zusätzlich in Längsrichtung. Sie sind hilfreich bei der Vormontage. Um zu verhindern, dass die Federzungen im Betrieb unter hohen Betriebskräften nach außen nachgeben können, ist es zweckmäßig, dass die Seitenwände der Klappe die Bewegung der Federzungen bei geschlossener Klappe blockieren, indem die Innenseiten der Seitenwände an den Außenseiten der Federzungen anliegen.

### Kurze Beschreibung der Zeichnungen

Weitere Vorteile ergeben sich aus der folgenden Zeichnungsbeschreibung. In der Zeichnung ist ein Ausführungsbeispiel der Erfindung dargestellt.

Es zeigen:
Fig. 1 eine perspektivische Darstellung einer erfindungsgemäßen Anschlussvorrichtung im halb montierten Zustand,

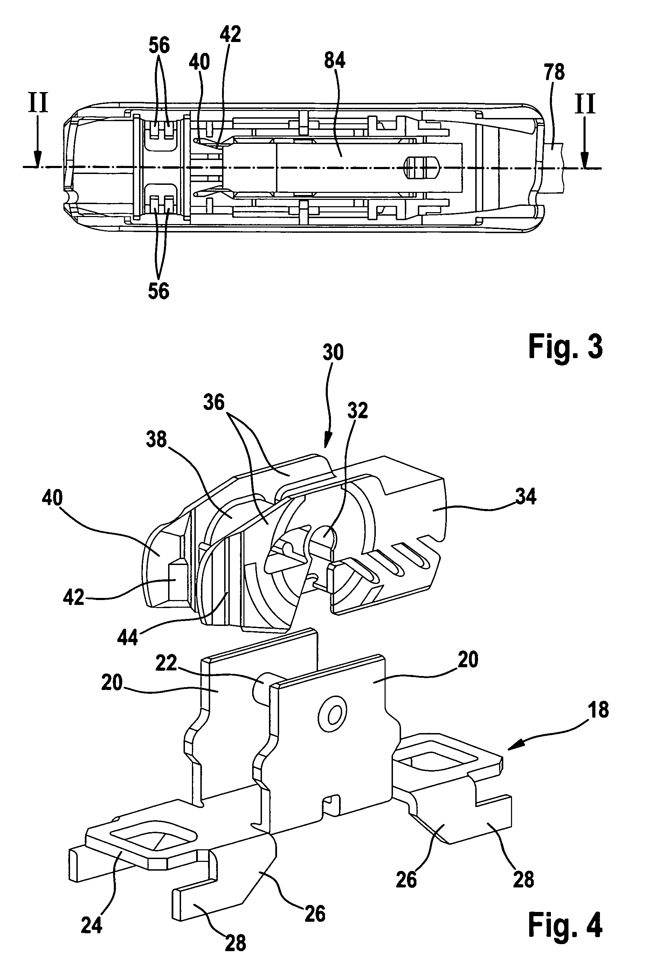

Fig. 2 einen Längsschnitt durch die Anschlussvorrichtung entsprechend der Linie II-II in Fig. 3,
Fig. 3 eine Ansicht der Anschlussvorrichtung von unten,
Fig. 4 eine Explosionszeichnung eines Anschlusselements mit
   einem Adapter,
Fig. 5 einen Längsschnitt durch eine Klappe und
Fig. 6 eine perspektivische Darstellung eines Wischblatts und
   der Anschlussvorrichtung mit einer geöffneten Klappe.

### Ausführungsformen der Erfindung

Ein Wischblatt 10 in Flachbalkenbauweise besitzt eine Wischleiste 14 mit einem nicht sichtbaren Tragelement. Dieses kann in üblicher Weise aus einer Federschiene bestehen, die in einem zentralen Längskanal der Wischleiste 14 untergebracht ist oder aus zwei Federschienen, die in seitlichen Längsnuten der Wischleiste 14 angeordnet sind. Auf dem Tragelement ist zu beiden Seiten einer Anschlussvorrichtung 16 ein Spoiler 12 vorgesehen.

Die Anschlussvorrichtung 16 dient zum gelenkigen Verbinden des Wischblatts 10 mit einem Wischarm 78, dessen Ende als hakenförmiges Ende 80 mit einem oberen Schenkel 82 und einem unteren Schenkel 84 sowie einem bogenförmigen, die beiden Schenkel 82, 84 miteinander verbindenden Verbindungsstück 86 ausgebildet ist. Die Anschlussvorrichtung 16 umfasst ein Anschlusselement 18, das aus Blech oder Kunststoff gefertigt sein kann und dessen Seitenwände 20 einen Gelenkbolzen 22 tragen. Dieser verläuft quer zur Längsrichtung 88 und parallel zu einer nicht näher dargestellten Fahrzeugscheibe, auf der die Wischleiste 14 während einer Wischbewegung gleitet. Das Anschlusselement 18 ist durch Krallenfüße 26, die an einem Boden 24 des Anschlusselements 18 angeformt sind, am Tragelement befestigt, wobei Lappen 28, die an den Krallenfüßen 26 angeformt sind, das Tragelement oder ein mit diesem verbundenes Verbindungselement hintergreifen.

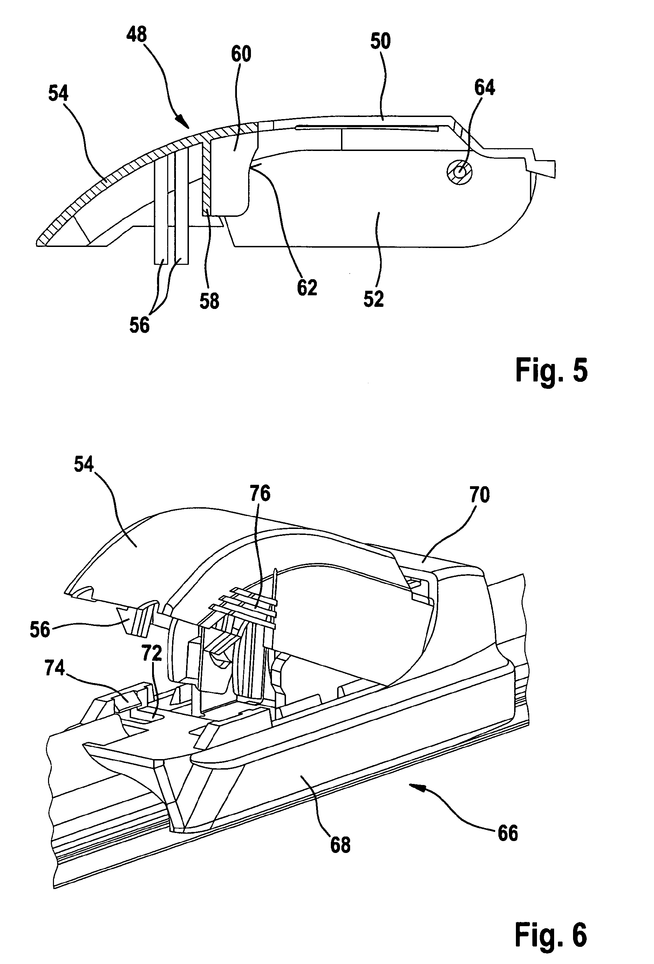

Auf dem Gelenkbolzen 22 ist mittels einer offenen Nabe 32 ein Adapter 30 gelagert, der zwischen Seitenwänden 34 eine Lagerfläche 38 für das hakenförmige Ende 80 des Wischarms 78 besitzt. Verlängerungen 36 der Seitenwände 34, die über die Lagerfläche 38 vorstehen, dienen zur seitlichen Führung des Wischblatts 10 gegenüber dem Wischarm 78. An den Außenflächen der Seitenwände 34 sind für eine reibungsarme Bewegung zwischen dem Anschlusselement 18 und dem Adapter 30 Führungsrippen 44 angeordnet. Auf dem Anschlusselement 18 sitzt eine Abdeckung 46. Diese wird durch ein Basiselement 66 mit einer Klappe 48 gebildet. Das Basiselement 66 sitzt fest auf dem Anschlusselement 18, während die Klappe 48 mittels Schwenkzapfen 64 gelenkig am Basiselement 66 gelagert ist (Fig. 5). Es besitzt zwei miteinander verbundene Seitenteile 68, die im Bereich der Schwenkzapfen 64 hochgezogen und durch ein Brückenteil 70 versteift sind.

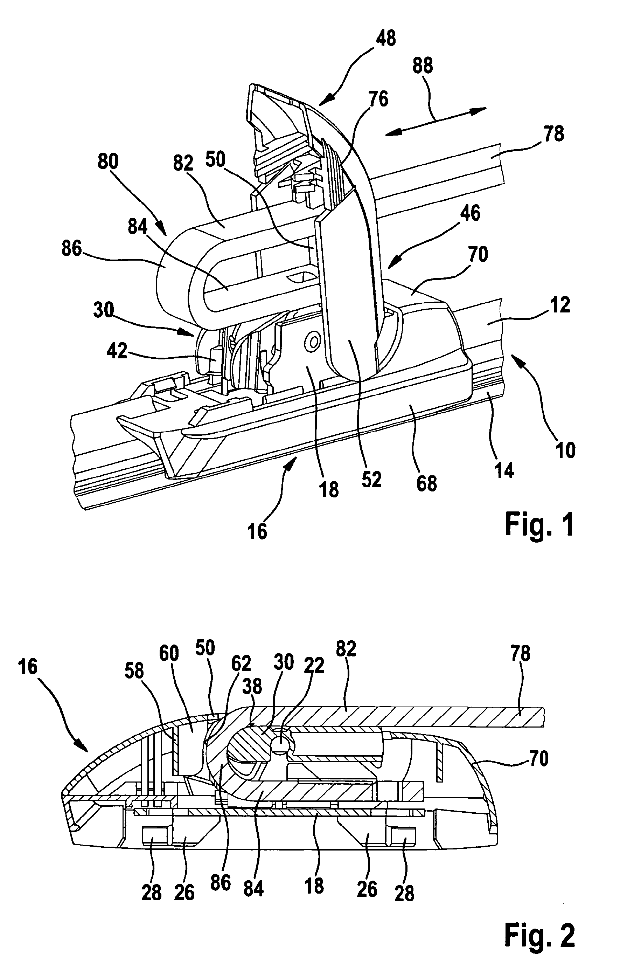

Die Klappe 48 besitzt an ihrer Deckseite eine Öffnung 50, durch die bei geöffneter Klappe 48 das hakenförmige Ende 80 in Längsrichtung 88 geschoben und durch Bewegungen quer zum Wischblatt 10 und in Längsrichtung 88 auf den Adapter 30 montiert werden kann (Fig. 1). Im montierten Zustand (Fig. 2) schließt das hakenförmige Ende mit seinen Schenkeln 82 und 84 sowie dem Verbindungsstück 86 den Adapter 30 ein und liegt mit seiner Innenseite an der Lagerfläche 38 des Adapters 30 an. Dabei überdeckt der untere Schenkel 84 des hakenförmigen Endes 80 die Öffnung der offenen Nabe 32. Auf der der Lagerfläche 38 gegenüberliegenden Seite des hakenförmigen Endes 80 befindet sich an einer Stützwand 60 eine Anlagekontur 62, die verhindert, dass das hakenförmige Ende 80 sich unbeabsichtigt vom Adapter 30 lösen kann. Die Stützwand 60 verläuft in Längsrichtung 88 und ist an einer Querwand 58 angeformt. Sie kann so ausgebildet sein, dass sie beim Schließen der Klappe 48 nach Art einer Schnappverbindung das Verbindungsstück 86 umfasst. Die Querwand 58 kann auch durch eine vordere Stirnwand 54 der Klappe 48 gebildet werden. Anstelle der Schnappverbindung oder zusätzlich dazu kann die Klappe 48 in ihrem Frontbereich Rasthaken 56 besitzen, die in Rastvertiefungen 72 des Basiselements 66 eingreifen. Die nach innen nachgiebigen Rasthaken 56 hintergreifen dabei Rastnocken 74 an den seitlichen Rändern der Rastvertiefungen 72. Über einen Druck auf die in diesen Bereichen nachgiebigen Seitenwände 52 der Klappe 48 können die Rasthaken 56 aus den Rastvertiefungen 72 wieder gelöst werden. Zur besseren Handhabung sind an der Außenseite der Seitenwände 52 im Bereich der Rasthaken 56 Griffleisten 76 vorgesehen.

Während das Anschlusselement als Blechkralle ausgebildet oder aus Kunststoff hergestellt sein kann, ist es zweckmäßig, dass der Adapter 30 und die Abdeckung aus Kunststoff gefertigt sind. Zur Erleichterung der Vormontage und aus Gründen der zusätzlichen Sicherung kann es zweckmäßig sein, dass die Seitenwände 34 zum vorderen Ende hin durch Federzungen 40 verlängert sind, an denen sich Rastnocken 42 befinden. Wird das hakenförmige Ende 80 montiert, geben die Federzungen 40 nach außen nach, sodass das bogenförmige Verbindungsstück 86 des hakenförmigen Endes 80 zwischen die Rastnocken 42 einrasten kann. Dadurch erreicht man bereits vor dem Schließen der Klappe 48 eine definierte Lage zwischen dem hakenförmigen Ende 80 und dem Adapter 30. Wird die Klappe 48 nunmehr geschlossen, ist es vorteilhaft, dass die Innenseiten der Seitenwände 52 der Klappe 48 die Bewegung der Federzungen 40 nach außen blockieren.

## Patentansprüche

1. Anschlussvorrichtung (16) zum gelenkigen Verbinden eines Wischblatts (10) in Flachbalkenbauweise mit einem Wischarm (78), wobei die Anschlussvorrichtung (16) ein mit dem Wischblatt (10) verbundenes Anschlusselement (18) besitzt, auf dessen quer zu Längsrichtung (88) des Wischblatts (10) und parallel zu einer Fahrzeugscheibe verlaufenden Gelenkbolzen (22) ein Adapter (30) gelagert ist, der eine Lagerfläche (38) für ein hakenförmiges Ende (80) eines Wischarms (78) aufweist, das durch eine Abdeckung (46) mit einem auf dem Anschlusselement (18) sitzenden Basiselement (66) und einer Klappe (48) in der montierten Stellung gesichert ist, die um eine parallel zum Gelenkbolzen (22) verlaufende Achse schwenkbar am Basiselement (66) gelagert ist, wobei die Klappe (48) eine Öffnung (50) aufweist, durch die das hakenförmige Ende (80) bei geöffneter Klappe (48) montierbar ist, **dadurch gekennzeichnet, dass** die Klappe (48) eine Querwand (58) aufweist, die bei geschlossener Klappe (48) der Lagerfläche (38) gegenüberliegt und an der eine in Längsrichtung (88) verlaufende, auf die Lagerfläche (38) gerichtete Stützwand (60) angeformt ist, an deren freier Stirnseite eine Anlagekontur (62) für das hakenförmige Ende (80) vorgesehen ist, die bei geschlossener Klappe (48) das hakenförmige Ende (80) in Längsrichtung (88) sichert und als Schnappverbindung ein bogenförmiges Verbindungsstück (86) des hakenförmigen Endes (80) zumindest teilweise umfasst.

2. Anschlussvorrichtung (16) nach Anspruch 1, **dadurch gekennzeichnet, dass** die Querwand (58) von der vorderen Stirnwand (54) der Klappe (48) gebildet ist.

3. Anschlussvorrichtung (16) nach Anspruch 1 oder 2, **dadurch gekennzeichnet, dass** die Klappe (48) an ihren Längsseiten im Bereich der vorderen Stirnwand (54) nach innen nachgiebige Rasthaken (56) aufweist, die bei geschlossener Klappe (48) in Rastvertiefungen (72) des Basiselements (66) eingreifen und Rastnocken (74) hintergreifen.

4. Anschlussvorrichtung (16) nach Anspruch 3, **dadurch gekennzeichnet, dass** im Bereich der Rasthaken (56) an den Außenseiten der Klappe (48) Griffleisten (76) oder Griffmulden angeordnet sind, über die die Rasthaken (56) nach innen gedrückt werden können.

5. Anschlussvorrichtung (16) nach Anspruch 1, **dadurch gekennzeichnet, dass** der Adapter (30) in Längsrichtung (88) über das hakenförmige Ende (80) hervorragende Federzungen (40) mit nach innen gerichteten Rastnocken (42) besitzt, die in montierter Stellung das hakenförmige Ende (80) in Längsrichtung (88) sichern.

6. Anschlussvorrichtung (16) nach Anspruch 5, **dadurch gekennzeichnet, dass** die Seitenwände (52) der Klappe (48) die Bewegung der Federzungen (40) bei geschlossener Klappe (48) blockieren.

## Claims

1. Connector device (16) for the articulated connection of a wiper blade (10) of flat bar construction to a wiper arm (78), wherein the connector device (16) has a connecting element (18) which is connected to the wiper blade (10) and on the hinge pin (22) of which, the hinge pin running transversely with respect to the longitudinal direction (88) of the wiper blade (10) and parallel to a vehicle window, an adapter (30) is mounted, the adapter having a bearing surface (38) for a hook-shaped end (80) of a wiper arm (78) which is secured in the fitted position by a covering (46) with a base element (66) which sits on the connecting element (18) and with a flap (48) which is mounted on the base element (66) so as to be pivotable about an axis running parallel to the hinge pin (22), the flap (48) having an opening (50) through which the hook-shaped end (80) can be fitted when the flap (48) is open, **characterized in that** the flap (48) has a transverse wall (58) which, when the flap (48) is closed, lies opposite the bearing surface (38) and on which a supporting wall (60) is integrally formed, the supporting wall running in the longitudinal direction (88), being aligned with the bearing surface (38) and on the free end side of which a bearing contour (62) for the hook-shaped end (80) is provided, said bearing contour, when the flap (48) is closed, securing the hook-shaped end (80) in the longitudinal direction (88) and, in the form of a snap-in connection, at least partially surrounding an arc-shaped connecting piece (86) of the hook-shaped end (80).

2. Connector device (16) according to Claim 1, **characterized in that** the transverse wall (58) is formed by the front end wall (54) of the flap (48).

3. Connector device (16) according to Claim 1 or 2, **characterized in that** the longitudinal sides of the flap (48) have, in the region of the front end wall (54), inwardly compliant latching hooks (56) which, when the flap (48) is closed, engage in latching depressions (72) of the base element (66) and reach behind latching cams (74).

4. Connector device (16) according to Claim 3, **characterized in that** gripping strips (76) or gripping troughs are arranged on the outer sides of the flap (48) in the region of the latching hooks (56), via which gripping strips or gripping troughs the latching hooks (56) can be pressed inwards.

5. Connector device (16) according to Claim 1, **characterized in that** the adapter (30) has spring tongues (40) which protrude in the longitudinal direction (88) over the hook-shaped end (80) and have inwardly directed latching cams (42) which, in the fitted position, secure the hook-shaped end (80) in the longitudinal direction (88).

6. Connector device (16) according to Claim 5, **characterized in that** the side walls (52) of the flap (48) block the movement of the spring tongues (40) when the flap (48) is closed.

## Revendications

1. Dispositif de raccordement (16) pour la liaison articulée d'une raclette d'essuie-glace (10) dans une conception de barre plate avec un bras d'essuie-glace (78), le dispositif de raccordement (16) présentant un élément de raccordement (18) relié à la raclette d'essuie-glace (10), élément sur le boulon d'articulation (22) duquel, agencé transversalement au sens longitudinal de la raclette d'essuie-glace (10) et parallèlement (88) à une vitre de véhicule, est monté un adaptateur (30), qui présente une surface de palier (38) pour une extrémité (80) en forme de crochet d'un bras d'essuie-glace (78), laquelle est bloquée par un recouvrement (46) avec un élément de base (66) logé sur l'élément de raccordement (18) et un clapet (48) dans la position montée, lequel est fixé sur l'élément de base (66) de façon à pouvoir basculer autour d'un axe agencé parallèlement au boulon d'articulation (22), le clapet (48) présentant une ouverture (50), par laquelle l'extrémité (80) en forme de crochet peut être montée lorsque le clapet (48) est ouvert, **caractérisé en ce que** le clapet (48) présente une paroi transversale (58), qui fait face à la surface de palier (38) lorsque le clapet (48) est fermé, et sur laquelle est formée une paroi de soutien (60) agencée dans le sens longitudinal (88) et dirigée vers la surface de palier (38), paroi sur le côté frontal libre de laquelle est prévu un contour d'appui (62) pour l'extrémité (80) en forme de crochet, lequel contour bloque l'extrémité (80) en forme de crochet dans le sens de la longueur (88) lorsque le clapet (48) est fermé et entoure au moins partiellement comme liaison d'encliquetage une pièce de liaison (86) en forme d'arc de l'extrémité (80) en forme de crochet.

2. Dispositif de raccordement (16) selon la revendication 1, **caractérisé en ce que** la paroi transversale (58) est formée par la paroi frontale (54) avant du clapet (48).

3. Dispositif de raccordement (16) selon la revendication 1 ou 2, **caractérisé en ce que** le clapet (48) présente sur ses côtés longitudinaux dans la zone de la paroi frontale (54) avant des crochets d'arrêt (56) flexibles vers l'intérieur, qui, lorsque le clapet (48) est fermé, s'engagent dans des cavités d'arrêt (72) de l'élément de base (66) et saisissent à l'arrière des cames d'arrêt (74).

4. Dispositif de raccordement (16) selon la revendication 3, **caractérisé en ce que** des baguettes de maintien (76) ou des poignées encastrées, par lesquelles les crochets d'arrêt (56) peuvent être poussés vers l'intérieur, sont disposées dans la zone des crochets d'arrêt (56) sur les côtés extérieurs du clapet (48).

5. Dispositif de raccordement (16) selon la revendication 1, **caractérisé en ce que** l'adaptateur (30) présente des lames de ressort (40), dépassant dans le sens de la longueur (88) par l'extrémité (80) en forme de crochet, avec des cames d'arrêt (42) dirigées vers l'intérieur, qui, dans l'état monté, bloquent l'extrémité (80) en forme de crochet dans le sens de la longueur (88).

6. Dispositif de raccordement (16) selon la revendication 5, **caractérisé en ce que** les parois latérales (52) du clapet (48) bloquent le déplacement des lames de ressort (40) lorsque le clapet (48) est fermé.
